# EUROPEAN PATENT APPLICATION

(11) **EP 2 091 256 A1**
(43) Date of publication of application: **19.08.2009**
(21) Application number: 08151550.4
(22) Date of filing: 18.02.2008
(51) Int. Cl.: H04N 7/26, H04N 7/66, H03M 13/15, H04N 7/167

(54) **Method for the removal of artefacts from a transmitted digital audio/video signal**

(71) Applicant: Nagravision S.A., 1033 Cheseaux-sur-Lausanne (CH)
(72) Inventor: Perrine, Jérôme, 1013 Bussigny (CH); Kudelski, Henri, 1071 Chexbres (CH)
(74) Representative: Leman Consulting S.A.

(57) **Abstract**

A method is described which makes use of a combination of known error correction techniques and the processing of encrypted messages to allow an authorised receiver to eliminate any potential artifacts from a transmitted digital data stream. The method is of particular use in the pay-TV industry where the encrypted messages are based on the commonly used entitlement management message (EMM) protocol, said messages being used to pass on information allowing a solution to a specified error correction algorithm to be found, thus allowing an authorised receiver to remove artifacts from a received signal which may include a noise component either intentionally added or otherwise.

## Description

### INTRODUCTION

The present invention relates to the domain of pay-TV, in particular to the treatment of an audio/video signal, at the transmission and at the reception of said signal, to allow a subscriber with the appropriate authorisation to restore the original signal quality of an otherwise possibly noisy transmitted signal.

### BACKGROUND OF THE INVENTION

Methods for encrypting or scrambling data so that only authorised recipients are able to decode said data have been extensively described and are in common use in industries such as pay-TV. Similarly, methods for detecting and correcting errors in data streams, both upon reception of a transmitted data stream or following the recovery of the data from a storage device or memory device, are also well documented and are in common use in CD or DVD applications and in satellite communication and broadcasting fields.

In the field of pay-TV systems, audiovisual information, representing a particular program or event such as a film or a game, or a program application, is usually broadcast in a digital data stream, often referred to as a transport stream, scrambled under a control word (CW), to a number of subscribers, each of which possesses a decoder or receiver/decoder capable of descrambling the transport stream for subsequent viewing of the contained program or event or to be able to run the application program contained therein. For additional security, the CW is regularly updated. The CWs are encrypted under a transmission key (KT) to form Entitlement Control Messages (ECM), which are transmitted as part of the transport stream and received by a decoder having access to an equivalent of the transmission key (KT), thus allowing the control words to be determined and the program data or application data to be descrambled. In another embodiment the ECM do not directly contain the encrypted control words but contain information allowing the control words to be determined depending on the receiver's right to decode the transmission. For example the decrypting of an ECM could give a piece of data which contains a control word and a value associated with the contents of transmission, namely the access conditions. Another way is to use a one-way function to determine a control word. This is well documented in several publications such as "Functional Model of a Conditional Access System", by EBU Project Group B/CA in EBU Technical Review, Winter 1995 or International Patent WO 99/18729, "Method and Apparatus for Encrypted Data Stream Transmission", by Maillard et al., April 1999.

In general the security operations are carried out in a security module associated with a multi-media unit or receiver. Such security modules can be implemented in a variety of manners such as on a microprocessor card, on a smartcard or any electronic module in the form of a badge or key. These modules are generally portable and detachable from the receiver. The most commonly used form has electrical contacts but contactless versions of type ISO 14443 also exist. Another implementation of the security module exists where it is directly soldered inside the receiver, a variation of this being a circuit on a socket or connector such as a SIM module. Yet another implementation is to have the security module integrated on a chip which has another function e.g. on the de-scrambling module or on the microprocessor module of the decoder. The security module can also be implemented in software.

Error detection can be achieved using a repetition scheme whereby the data is sent a repeated number of times for comparison purposes. Other error detection schemes involve complementing the data stream with a number of extra bits whose purpose is to check the accuracy of the data. The extra bits or redundant bits are organised according to a protocol such as a parity scheme or a checksum scheme or a cyclic redundancy check (CRC) scheme. Apart from the repetition scheme, which may or may not allow for error correction, error detection schemes do not generally allow for the correction of erroneous data.

Error correction schemes are used to improve the reliability of data that may have been corrupted either during transmission or during recovery of the data from a storage unit. Such schemes have an advantage over error detection schemes in that they can calculate the most likely result following the detection of an error i.e. they can make an attempt at repairing the detected errors. Simpler schemes use repetition whereby the receiver will request the transmitter to repeat a transmission where an error has been detected. More elaborate schemes allow for forward error correction (FEC). In FEC schemes, redundancy or parity is added to the transmitted data such that upon reception of a data transmission, the possibly corrupt data and redundancy are mathematically processed to correct errors in the transmission. Depending on the scheme used, each redundant bit is a complex function of many original information bits. The original information thus may or may not appear in the encoded transmission depending on whether the scheme yields a systematic code or a nonsystematic code. Examples of error correction codes are Turbo Code, Binary Golay Code, Hamming Code, Viterbi Code and Reed Solomon Code. The two latter codes are commonly used in deep-space communications, satellite broadcasting and data storage applications.

Error correction codes (ECC) can be linear or non-linear, although most practically used codes are linear. Linear error correction codes can be further subdivided into two categories, namely block codes or convolutional codes. Reed-Solomon codes and Hamming codes are two examples of linear block codes. These codes are systematic, i.e. the codes comprise a fixed-size block of original data bits with a fixed number of redundant bits appended.

Convolutional codes may be systematic or non-systematic and do not result in fixed-size blocks of original data with redundant bits appended but rather result in a continuous stream of bits. A convolutional code can be generated by putting a source stream through a linear filter. This filter makes use of at least one shift register, linear output functions, and, possibly, linear feedback. The result is often referred to as a stream code. Viterbi code is an example of a convolutional code. Given a received sequence of samples through such a filter, a decoder is able to infer the source stream.

### SUMMARY OF THE INVENTION

The present invention describes a method for the removal of artifacts from a digital data stream, otherwise known as a transport stream, said method being achieved by a receiver comprising an error correction module, said transport stream comprising redundant error correction information concordant with a specific error correction scheme, this method comprising the steps of:
- receiving at least one set of encrypted set of configuration data, said configuration data defining the specific error correction scheme among a plurality of error correction schemes,
- decrypting said configuration data,
- loading the decrypted configuration data into the error correction module,
- receiving the transport stream,
- loading the transport stream into the error correction module,
- extracting a digital signal from the error correction module according to the specific error correction scheme.

The term configuration data as used in the above summary refers to a set of data which is used to initialise the error correction module. The use of the configuration data is a necessary prerequisite to solve the error correction algorithm and said configuration data is unique and proprietary and cannot be duplicated independently by a third party.

### BRIEF DESCRIPTION OF THE DRAWINGS

The invention will best be understood by reference to the following detailed description of the preferred embodiment when read in conjunction with the accompanying drawings, wherein:
FIG.1 shows a generator matrix for a (7,4) Hamming Code.
FIG.2 shows a parity check matrix for a (7,4) Hamming Code.
FIG.3 shows a block diagram of a transmission-reception system consistent with the preferred embodiment of the present invention.
FIG.4 shows a representation of a possible data stream in an embodiment of the present invention which uses a systematic error correction scheme and where the digital audio/video data is not encrypted.
FIG.5 shows a variation of the preferred embodiment of the present invention wherein the security operations are carried out in a security module.
FIG.6 shows a block diagram of a transmission-reception system consistent with an embodiment of the present invention where the digital audio/video data is encrypted.
FIG.7 shows a block diagram of a transmission-reception system consistent with an embodiment of the present invention where EMMs containing error correction configuration data are transmitted on the same channel as program or application data.
FIG.8 depicts an embodiment of the present invention wherein the receiver comprises a memory in which to store a plurality of different sets of configuration data and a plurality of broadcast channels are used to receive a plurality of programs or services.
FIG.9 shows a block diagram of a transmission-reception system consistent with an embodiment of the present invention where noise is added before transmission.

### DETAILED DESCRIPTION OF THE PREFERRED EMBODIMENT

The present invention is of particular relevance to the pay-TV industry and makes use of known error correction techniques such as Viterbi or Reed-Solomon or any other such technique or modification thereof to transmit digital audio/video data, representing a program or an event (by radio, satellite, cable or internet links) to a plurality of subscribers, while allowing those subscribers who have acquired the necessary authorisation to view said program or event the possibility of being able to process such data, upon reception, in a manner that yields a high quality audio/video signal free of artifacts which may have been introduced, either intentionally or otherwise, during transmission. By making use of known data encryption techniques, the invention further allows the possibility of precluding such error correction possibilities from users who do not have the authorisation to view the program or event. Specifically, the preferred embodiment allows for paid-up subscribers to receive artifact-free audio/video data in the event that noise is intentionally added to the transmitted signal, the quality of the received signal depending on the amount of added noise relative to the power of the chosen error correction scheme.

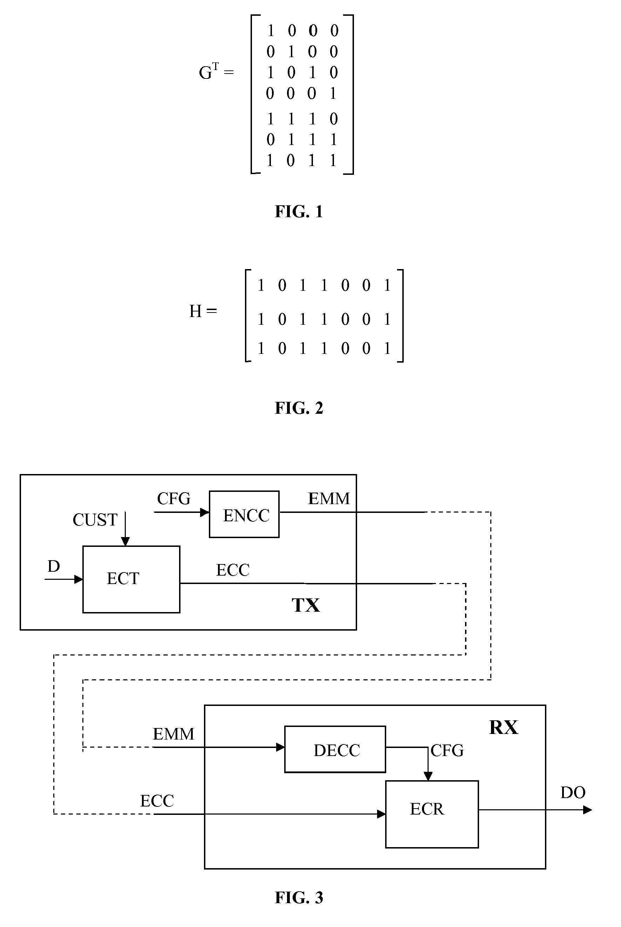

Error correction schemes are well-known in the fields of deep-space communications, satellite broadcasting and data storage and recovery. Such schemes involve the transmission of codes which are generated from the source data and represent the source data plus some added redundancy. These codes can be divided into two types: convolutional codes or block codes. By way of example a description of a block code is made hereafter. A block code is a rule for converting a sequence of source bits s, of length K, say, into a transmitted sequence t of length N bits. Since there is redundancy added, N will invariably be greater than K. In a linear block code the extra N-K bits are a linear function of the original K bits. The Hamming code is an example of a linear block code. In the (7,4) Hamming code, N=7 and K=4 and for every four source bits a total of 7 bits would be transmitted. Mathematically, the Hamming code can be written in a compact manner in terms of matrices. For example, the sixteen codewords {t} of the (7,4) Hamming code are generated by the linear operation t=G^{T}.s modulo 2, where G^{T} is the generator matrix shown in FIG.1 and s is the sequence of source bits to be transmitted. The transmitted codewords also satisfy the equation H.t = 0 modulo 2, where H is referred to as the parity check matrix for the code, as shown in FIG.2.

Although the error correction scheme used in the present invention may be a standard scheme generally known in the industry, such as Reed-Solomon or Viterbi, the particular method of implementation of the scheme is customised, as illustrated in FIG.3, by initialising the error correction module on the transmitter side (ECT) with a set of customisation data (CUST), thereby defining the specific error correction scheme among a plurality of error correction schemes, and providing authorised receivers with a corresponding set of configuration data (CUST') for use in the error correction process. This configuration data, when loaded into the error correction module at the receiver end (ECR), primes the said error correction module allowing it to correctly carry out the chosen error correction scheme among a plurality of error correction schemes. The configuration data is proprietary and can not be easily discovered by a third party. Without this configuration data, the error correction module (ECR) can not produce artifact-free data from a noisy input data stream. By way of example, for a Reed-Solomon error correction scheme, said customisation data (CUST) could be a set of data allowing the transmitter to realise a generator matrix (G^{T}) to generate the error correction codes (ECC), while said configuration data (CUST') could be a set of data allowing the decoder to realise the correct parity check matrix (H) needed to solve said error correction algorithm.

The preferred embodiment of the present invention is illustrated in FIG.3. The data to be transmitted is denoted D and is called the transport stream. In a pay-TV application D would represent a transport stream comprising audio/video data, software, program guides, entitlement control messages, etc. i.e. all data that would be transmitted as part of a transport stream. The transmitter (TX) comprises an error correction module (ECT) and an encryption module (ENCC) capable of generating entitlement management messages (EMM) according to at least one of the industry standards. A set of customisation data (CUST) pertaining to the chosen error correction scheme is generated in the transmitter (TX) and loaded into the transmitter's error correction module (ECT). A set of configuration data (CUST') which will allow a receiving error correction unit to decode the error correction codes generated according to the chosen error correction scheme is also generated in the transmitter. Said configuration data (CUST') is encrypted by the encryption module (ENCC) and formatted as an entitlement control message (EMM) or a plurality of EMM destined for several different receivers. The error correction module (ECT) calculates error correction codes (ECC) based on the program data (D) and the customisation data (CUST) according to the chosen error correction scheme. The EMM are broadcast to one or a plurality of multimedia units or decoders, otherwise known as receivers (RX). The error correction codes (ECC) comprising the original transport stream (D) and the redundant bits (RED) is also broadcast to one or a plurality of receivers (RX).

At the reception end the receiver (RX) comprises a decryption module (DECC) to decrypt the EMM and an error correction module (ECR) to perform the chosen error correction algorithm on data that the receiver is authorised to access. The EMM are decrypted and checked in order to ascertain whether or not the receiver has the appropriate rights to access the ensuing data broadcast. If the receiver has the necessary authorisation, then the configuration data (CUST') is extracted from the EMM and loaded into the error correction module (ECR). The error codes (ECC) comprising the program data (D) and the redundant bits (RED) are then received and loaded into the error correction module (ECR) to give artifact-free digital audio/video data (DO) representative of the original program data (D). If the receiver does not have the required rights to access the received data (ECC), then the correct configuration data (CUST') cannot be passed to the error correction module (ECR) and therefore the recovery of artifact-free data from the error correction module cannot be guaranteed.

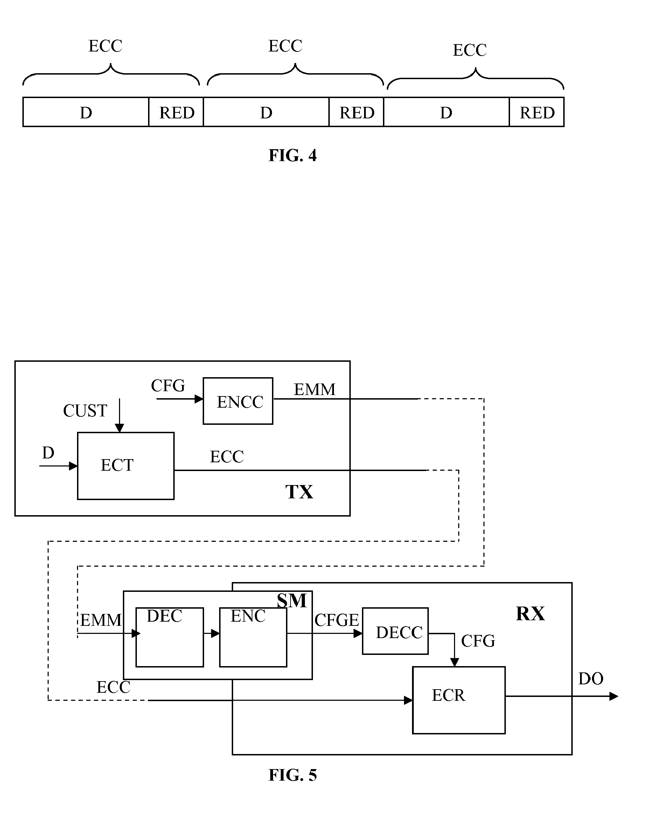

FIG.4 shows an example of the structure of the error codes to be transmitted (ECC) after processing by the transmitter's error correction module (ECT). This is an example of systematic error correction coding, such as Reed-Solomon, whereby the redundant bits (RED) allowing for the error correction are appended to original data bits (D), which are left intact. In a non-systematic error correction scheme the resulting code may include none of the original data bits. The present invention can work with systematic or nonsystematic error correction coding schemes.

A variation of the preferred embodiment is shown in FIG.5 wherein the receiver (RX) comprises a security module (SM). By security module it is meant a secure apparatus containing various encryption/decryption keys, information allowing for the identification of a user and information defining the user's rights to access received data. The security module can exist in various formats such as a smart card, an integrated circuit soldered to a mother board or a SIM card (Subscriber Identity Module) which exists in most portable devices. In this embodiment the decryption (DEC) of the EMM is carried out in the security module (SM), which verifies the rights of access to the received data. If the receiver has the necessary rights, then the security module (SM) extracts the configuration data (CUST') and passes it to the receiver (RX) for loading into the error correction module (ECR). If the security module (SM) is of the detachable type, then the configuration data is first encrypted (ENC) before being passed (CUSTE') to the receiver (RX), which in turn decrypts the configuration data (CUST') before loading it into the error correction module (ECR).

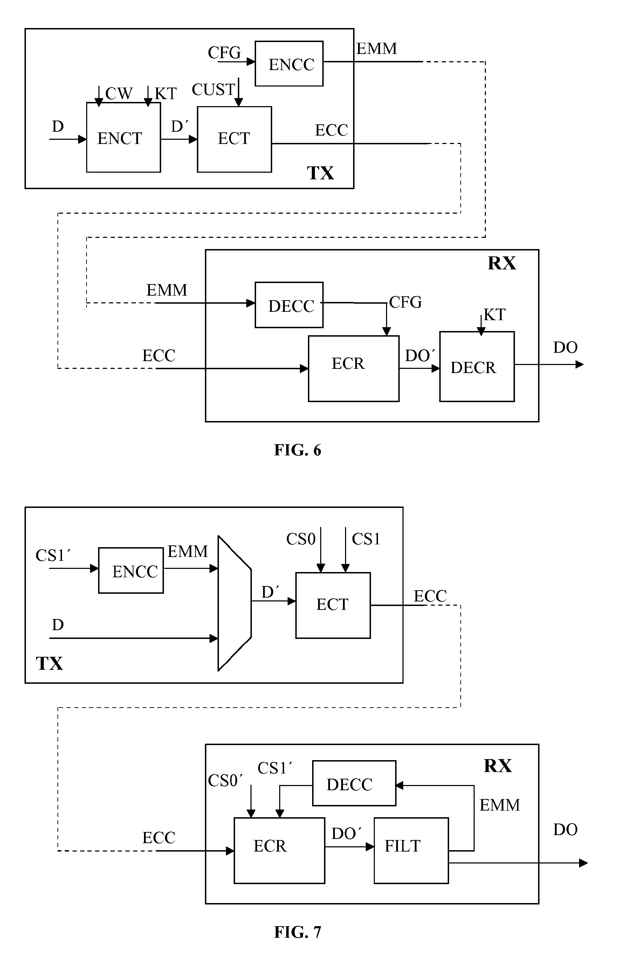

In yet another variation of the preferred embodiment, the program data may be encrypted at the transmitter end before processing by the error correction module as illustrated in FIG.6. In this embodiment a set of customisation data (CUST) and a set of configuration data (CUST') pertaining to the chosen error correction scheme are generated in the transmitter (TX). The customisation data (CUST) is loaded into the transmitter's error correction module (ECT). The configuration data (CUST') is encrypted by an encryption module (ENCC) to give an entitlement management message (EMM) or a plurality of EMM, which are broadcast to one or a plurality of receivers. The program data (D) is encrypted (ENCT) under control words (CW) to give encrypted program data (D'). The encrypted program data (D') comprises a series of entitlement control messages (ECM) which are produced from the control words (CW) encrypted under a transport key (KT), which is generally accepted as being of standard practice in the pay-TV industry. The encrypted program data (D') is passed to the error correction module (ECT), which calculates error correction codes (ECC) based on the encrypted program data (D') and the customisation data (CUST) according to the chosen error correction scheme. The resulting data stream (ECC) comprising the encrypted program data (D') and redundant error correction bits (RED), said encrypted program data comprising the entitlement control messages (ECM), is broadcast to one or a plurality of receivers.

On the receiver end (RX) the received EMM are decrypted by the decryption module (DECC) and verified in order to ascertain whether or not the receiver has the appropriate rights to access the ensuing data broadcast. If the receiver has the necessary authorisation, then the configuration data (CUST') is extracted from the EMM and loaded into the error correction module (ECR). The data stream (ECC) comprising the encrypted program data (D') and redundant bits (RED), said encrypted program data comprising the entitlement control messages (ECM), is then received and loaded into the error correction module (ECR) to give artifact-free encrypted program data (DO'), which in turn is decrypted in the decryption module (DECR) to give artifact-free, decrypted program data (DO) representative of the original program data (D). If the receiver does not have the required rights to access the received data (ECC), then the correct configuration data (CUST') cannot be passed to the error correction module (ECR) and therefore the recovery of artifact-free data from the error correction module cannot be guaranteed. As in a previously described variation, all of the security operations such as identity checking, signature verification, EMM decrypting or data decrypting may be carried out in a security module which could in turn encrypt any information that it passes to the receiver.

In any of the embodiments described herein, for added security, any or all of the encrypted information could also be signed in order to allow for the verification of the source of the information. For example the EMMs could be signed by the transmitter and checked for authenticity by the receiver or security module. Similarly if the digital audio/video data is encrypted, then it could also be signed by the transmitter and verified by the receiver or by the security module.

In the aforementioned embodiments of the current invention the transport stream is received via a first communication channel while the EMM containing the configuration data is received via a second communication channel distinct from the first communication channel, for example the EMM may be received via SMS in the case where the receiver has a mobile reception unit of type GSM or UMTS, or via a back channel in the case where the receiver has Internet Protocol access capability, or via a direct cable link. However in another embodiment of the present invention the EMM containing the configuration data could be received on the same communication channel on which the program data is received. This is illustrated in FIG.7 wherein a proprietary set of configuration data (CS1') is encrypted (ENCC) to give an EMM and is mixed with the program data (D) at the transmitter end (TX). The result (D') is processed in the error correction module (ECT) using a default set of customisation data (CS0), said default customisation data being previously agreed upon by the transmitter and the receiver. The receiver would therefore contain a set of default configuration data (CS0') relative to the default customisation data (CS0). On the receiver end the received data (ECC) is decoded in the error correction module (ECR) using the default configuration data (CS0') then filtered to extract the EMM, which is decrypted (DECC) to give the proprietary configuration data (CS1'). Once the EMM has been received by the receiver and decrypted to give the proprietary configuration data (CS1') the transmitter can then process subsequent transmissions using a set of proprietary error correction configuration data (CS1) corresponding to the configuration data (CS1'). A variation of this embodiment can be realized by scrambling, or shuffling blocks of data around before transmitting said data, then sending information allowing an authorised receiver to descramble the data. Other similar variations may be achieved by encrypting the program data before transmission rather than simply shuffling or by selectively encrypting parts of the data to be transmitted, for example encrypting only the redundant bits (RED) of the error correction codes.

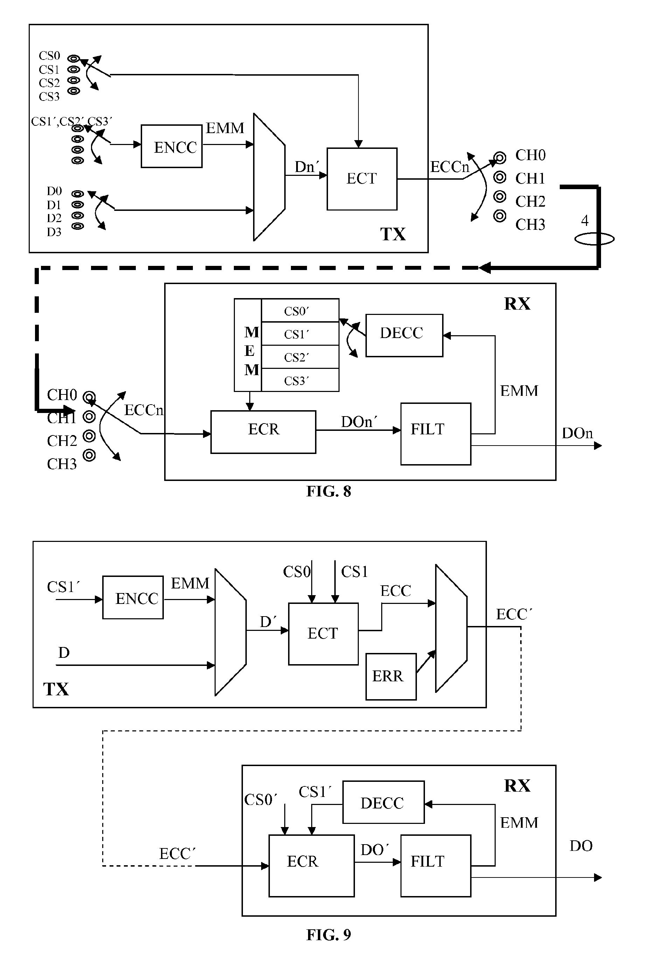

In another embodiment of the current invention the receiver (RX) comprises a memory (MEM) which is used to store the default set of configuration data (CS0' and one more set or a plurality of different sets of configuration data (CS1', CS2',..., CSn'), each of which could be associated with n separate channels as shown in FIG.8. There could be a protocol whereby upon power-up, the receiver switches to a service channel (CHO) where it would receive data containing several EMMs with encrypted configuration data sets for several other channels (CS1',CS2',...,CSn'), all of which have been processed by the transmitter's error correction module (ECT) using the default set of customisation data (CS0). This would allow an authorised receiver, with access to the corresponding default configuration data (CS0' and with the appropriate authorisation to access such information, to load several sets of configuration data into memory (MEM). Thereafter the transmitter would run the error correction routine using a different set of configuration data depending on which channel was being used to transmit a program and the receiver would be able to load the appropriate set of configuration data into its error correction module (ECR) depending on which channel it was receiving program data.

Yet another embodiment of the current invention (FIG9) exploits the error correction capabilities of the system to the full in that it involves the voluntary addition of artifacts to the transmitted transport stream to make sure that any receiver which has not been able to recover the configuration data will not be able to remove the artifacts from the received data regardless of whether or not said receiver comprises an error correction module. In this embodiment noise is added (ERR) to the transport stream (ECC) just before transmission. Since only authorised receivers are able to extract the configuration data (CS1') from the EMMs that are addressed to them, then the system precludes unauthorised receivers from being able to extract an error-free signal from the noisy transmission (DERR).

The receiver module generally has a test mode whereby a test configuration is loaded into its memory and a reference digital data stream is supplied for the receiver to process. The result is then compared to a reference output.

## Claims

1. A method for the removal of artifacts from a digital data stream, said method being executed by a receiver comprising an error correction module, said digital data stream comprising redundant error correction information concordant with a specific error correction scheme, this method comprising the steps of:
- receiving at least one set of encrypted configuration data, said configuration data defining the specific error correction scheme among a plurality of error correction schemes,
- decrypting said configuration data,
- loading the decrypted configuration data into the error correction module,
- receiving the digital data stream,
- loading the digital data stream into the error correction module,
- extracting a digital signal from the error correction module according to the specific error correction scheme.

2. The method of claim 1 wherein the digital data stream is received through a first communication channel of the receiver, the encrypted set of configuration data being received through a second communication channel distinct from the first communication channel.

3. The method of claims 1 or 2 wherein the receiver contains a default set of configuration data, this method comprising the steps of:
- loading the default set of configuration data, defining a default error correction scheme, into the error correction module,
- receiving a first digital data stream comprising the encrypted set of configuration data,
- loading the received first digital data stream into the error correction module,
- extracting the encrypted set of configuration data from the error correction module according to the default error correction scheme,
- decrypting and storing said set of configuration data,
- loading the decrypted set of configuration data into the error correction module,
- receiving a further digital data stream,
- loading the further digital data stream into the error correction module,
- extracting a digital signal from the error correction module according to the specific error correction scheme.

4. The method of claim 3 wherein the receiver is able to receive data on at least two separate communication channels, one of which is designated as a service channel, this method comprising the steps of:
- applying the default configuration data while receiving the first data stream via the service channel,
- loading the decrypted set of configuration data into the error correction module while receiving the further data stream via one or a plurality of the other channels.

5. The method of claim 4 wherein said receiver comprises a memory to store a plurality of sets of configuration data and is able to receive data on at least two separate channels said method comprising the steps of:
- loading a first set of configuration data into the error correction module while receiving the first data stream via a first channel,
- loading a second set of configuration data into the error correction module while receiving the further data stream via a second channel.

6. The method of either of claims 1 through 5 wherein said receiver is locally connected to a security module in which the step involving the decryption is carried out.

7. An audio/video receiver unit comprising at least one communication channel, at least one decryption module and at least one error correction module, **characterised in that** said error correction module is programmable and can be loaded with a set of configuration data defining a specific error correction scheme among a plurality of error correction schemes, said configuration data resulting from the decryption of a received encrypted message.

8. The audio/video receiver unit of claim 7 **characterised in that** said receiver unit comprises a second communication channel through which said encrypted message containing said configuration data is received, said second communication channel utilising a reception means other than that used to receive said digital data stream such as SMS, IP or modem.

9. The audio/video receiver unit of claim 8 **characterised in that** said receiver unit comprises a memory in which a set of default configuration data is stored, said default configuration data being loaded into said error correction unit while receiving the set of encrypted configuration data, said encrypted configuration data being decrypted and loaded into said error correction unit in order to perform further error correction on subsequently received said digital data stream.

10. The audio/video receiver unit of claim 9 **characterised in that** said audio/video receiver unit comprises a memory module capable of storing a plurality of sets of configuration data, said receiver unit being capable of receiving digital data streams on a plurality of channels, said receiver unit receiving a plurality of sets of encrypted configuration data, each one of said plurality of sets of encrypted configuration data corresponding to each one of said plurality of channels, said sets of encrypted configuration data being decrypted and stored in said memory module, said error correction module being loaded with the appropriate set of decrypted configuration data relative to the channel on which further said digital data stream is received

11. The audio/video receiver unit of claims 7 through 10 **characterised in that** it further comprises a further decryption module in which all or part of said extracted digital signal is decrypted.

12. The audio video receiver unit of claims 7 through 11 **characterised in that** it further comprises a security module in which the decryption of the sets of configuration data is carried out.
